# EUROPÄISCHE PATENTANMELDUNG

(11) **EP 4 556 655 A1**
(43) Veröffentlichungstag der Anmeldung: **21.05.2025**
(21) Anmeldenummer: 23209880.6
(22) Anmeldetag: 14.11.2023
(51) Int. Cl.: E04H 12/22, E02D 27/42

(54) **FUNDAMENT, WINDENERGIEANLAGE MIT SELBIGEM, SOWIE VERFAHREN UND VERWENDUNG ZUR HERSTELLUNG DESSELBEN**

(71) Anmelder: Wobben Properties GmbH, 26607 Aurich (DE)
(72) Erfinder: Vogel, Markus, 26125 Oldenburg (DE); Villada, Jose A., 26129 Oldenburg (DE)
(74) Vertreter: Eisenführ Speiser

(57) **Zusammenfassung**

Die Erfindung betrifft ein Fundament (1) einer Windenergieanlage (100), mit einem Fundamentteil (3), das aus mittels einer Bewehrung (10) verstärktem Beton (F) ausgebildet ist, und eine oberseitige, nach außen hin abfallende Neigung (α) aufweist.

Es wird vorgeschlagen, dass eine Fließsperre (9) innerhalb des Fundamentteils (3) angeordnet und dazu eingerichtet ist, ein Fließen des Betons (F) in radialer Richtung zu behindern.

## Beschreibung

Die vorliegende Erfindung betrifft ein Fundament einer Windenergieanlage, mit einem Fundamentteil, vorzugsweise Fundamentplatte, das aus mittels einer Bewehrung verstärktem Beton, insbesondere Frischbeton, ausgebildet ist, und eine oberseitige, nach außen hin abfallende Neigung aufweist.

Fundamente der vorstehend bezeichneten Art sind allgemein bekannt. Sie werden verwendet, um die Windenergieanlage bzw. deren Turm fest im Erdreich zu verankern.

Es ist grundsätzlich möglich, die Fundamente aus einer Mehrzahl vorgefertigter Formteile zusammenzusetzen, die fernab vom Errichtungsort produziert werden und zum Errichtungsort transportiert werden. Es hat sich aber an einer Vielzahl von Aufstellorten als zweckmäßig erwiesen, das Fundamentteil aus Frischbeton zu fertigen, der am Aufstellort oder in einem nahegelegenen Betonwerk angemischt und antransportiert wird.

Aus dem Trend zu leistungsfähigeren, größeren Windenergieanlagen einerseits und dem Wunsch, möglichst geringe Mengen an Beton im Erdreich zu hinterlassen folgt die Notwendigkeit, eine immer effizientere Verankerung der Windenergieanlage im Erdreich zu erreichen, mit entsprechenden Anforderungen an das Fundament.

Je größer die Windenergieanlage, und je größer die äußeren Abmessungen, bei rotationssymmetrischen Bauteilen etwa der Außendurchmesser, des Fundamentteils, desto mehr Betonvolumen wird in der Regel benötigt. Es besteht das Bestreben, eine möglichst gute Verankerung der Windenergieanlage im Erdreich zu gewährleisten, und dabei das Betonvolumen möglichst zu minimieren.

Es sind aus dem Stand der Technik Versuche bekannt, die Wirksamkeit des Fundaments relativ zum notwendigen Betoneinsatz zu verbessern, d. h. den relativen Betoneinsatz zu reduzieren, indem die Neigung des Fundamentteils, also die Neigung der vom Sockelbereich nach außen hin abfallend verlaufenden Oberfläche des Fundamentteils, höher wird. Von einer hohen bzw. erhöhten Neigung wird erfindungsgemäß bei einer Neigung von 12° oder mehr gesprochen.

Die Verarbeitung des Betons bei Fundamentteilen mit einer derart erhöhten Neigung ist signifikant erschwert. Der Beton hat aufgrund seines fließfähigen Zustands beim Betonieren des Fundamentteils das Bestreben, radial nach außen in Richtung der äußeren Schalung zu fließen, und es ist dementsprechend mit hohem Arbeitsaufwand verbunden, überhaupt die angestrebte erhöhte Neigung herzustellen. Zur Gewährleistung der hohen Neigung ist im Stand der Technik die Notwendigkeit entstanden, Beton mit einer sehr steifen Konsistenz, d. h. einem geringen Ausbreitmaß zu mischen. Die erforderliche hohe Steifigkeit des Betons bewirkt wiederum erhöhten Aufwand bei der Verarbeitung, insbesondere beim Ausbreiten und Verdichten des Betons und beim Pumpen des Betons in die Schalung, welche die Herstellung des Fundamentteils insgesamt erschweren.

Der Erfindung lag folglich die Aufgabe zugrunde, ein Fundament anzugeben, welches die vorstehend beschriebenen Nachteile möglichst weitgehend überwindet. Insbesondere lag der Erfindung die Aufgabe zugrunde, ein Fundament der vorstehend bezeichneten Art dahingehend zu verbessern, dass auch erhöhte Neigungen wirtschaftlich vertretbar erreicht werden können, ohne die Qualität des Fundamentteils zu kompromittieren.

Die Erfindung löst die vorstehend bezeichnete Aufgabe, indem das Fundament mit den Merkmalen von Anspruch 1 ausgebildet ist. Insbesondere weist das Fundament eine Fließsperre auf, die innerhalb des Bereichs Fundamentteils angeordnet ist, in dem die oberseitige Neigung angeordnet ist, und dazu eingerichtet ist, ein Fließen des Betons in radialer Richtung zu behindern. Die Erfindung setzt auf der Erkenntnis auf, dass die natürliche Neigung des Betons, sich infolge der Schwerkraft radial innerhalb der äußeren Schalung auszubreiten und zu verteilen, durch Fließsperren innerhalb des Fundamentteils gezielt erschwert werden kann. Je stärker das Fließvermögen des Betons in radialer Richtung, insbesondere nach außen, behindert wird, desto eher kommt es, insbesondere an den radial inneren Bereichen in der Schalung, jeweils vor der Fließsperre, zum Aufstauen des Betons, wodurch sich auf natürlichem Wege bereits die oberseitige Neigung des Betons im abfallenden Bereich des Fundamentteils zumindest teilweise einstellt.

In bevorzugten Ausführungsformen ist das Fundamentteil eine Fundamentplatte des Fundaments, und/oder eine Verstärkungsrippe eines Rippenfundaments, und/oder ein Abschnitt eines Kreuzfundaments.

Die dann noch notwendigen Arbeiten, das Fundamentteil an ihrer äußeren Oberfläche auf die gewünschte Neigung zu bringen, sind im Vergleich zum Stand der Technik deutlich zeiteffizienter und mit weniger manuellem Aufwand zu realisieren.

Es lassen sich im Vergleich zum Stand der Technik mittels der Fließsperre Neigungen in einem Winkel von deutlich oberhalb 12° herstellen, und zugleich kann dies mit im Vergleich zum Stand der Technik deutlich dünnflüssigerem Beton erfolgen. Vorzugsweise wird hierzu ein Beton mit einem Ausbreitmaß F3 bis F4 und/oder einem Setzfließmaß S3 bis S4 gemäß DIN EN 206-1 verwendet.

Die Erfindung wird vorteilhaft weitergebildet, indem die Neigung in einem Bereich von 12° oder mehr, weiter vorzugsweise in einem Bereich von 12° bis 45°, noch weiter bevorzugt in einem Bereich von 12° bis 18°, und besonders bevorzugt in einem Bereich von 12° bis 16° liegt.

Alternativ oder zusätzlich weist erfindungsgemäß vorzugsweise die Bewehrung eine oberseitige Neigung auf, die im Wesentlichen im gleichen Winkel wie die Neigung des Fundamentteils verläuft. Als im Wesentlichen gleich werden Abweichungen von +/- 2° betrachtet. Das Ausführen der oberseitigen Neigung der Bewehrung in der gleichen Neigung wie die gewünschte Neigung ist, erleichtert das Herstellen der endgültigen Kontur des Fundamentteils.

In einer weiteren bevorzugten Ausführungsform weist die Fließsperre zumindest einen Ring auf, welcher umlaufend innerhalb der Bewehrung angeordnet ist. Der Ring kann einteilig oder mehrteilig ausgebildet sein und eine Mehrzahl entlang eines Teilkreises angeordneter Sperrelemente aufweisen, wobei die Sperrelemente zueinander beabstandet angeordnet sein können, aneinander auf Stoß angeordnet sein können, und/oder überlappend angeordnet sein können. Der Ring muss also keine mathematisch strenge Kreisform aufweisen, sondern kann auch eine kreisähnliche, etwa polygonale, Form aufweisen. Sofern der Ring mehrteilig ausgebildet ist, liegen mit anderen Worten die einzelnen Elemente des Rings vorzugsweise in etwa auf dem gleichen Teilkreis, sodass in allen Umfangsrichtungen des Fundamentteils eine Behinderung der Fließbewegung mit der Fließsperre erreicht wird.

In einer weiteren bevorzugten Ausführungsform weist das Fundamentteil eine Mittenachse auf, und die Fließsperre ist konzentrisch zu der Mittenachse ausgerichtet. Die Mittenachse des Fundamentteils entspricht vorzugsweise der Mittenachse des auf des Fundamentteils anzuordnenden Turms der Windenergieanlage.

In einer weiteren bevorzugten Ausführungsform ist die Fließsperre mit der Bewehrung verbunden, wobei vorzugsweise die Bewehrung eine vertikale Querkraftbewegung aufweist, und die Fließsperre im Bereich der vertikalen Schubbewegung angeordnet ist. Durch das Verankern der Fließsperre an der Bewehrung wird das Gießen des Betons in den Bereich der Bewehrung innerhalb der Schalung erleichtert, ein ungewolltes relatives Bewegen der Fließsperre zur Bewehrung wird unterbunden. Die vertikale Schubbewehrung eignet sich zur Anbindung der Fließsperre, weil sie im Strukturaufbau der Bewehrung ohnehin bereits vorhanden ist, sodass für die Verankerung der Fließsperre in der Bewehrung gemäß diesem Aspekt keine zusätzlichen Strukturelemente eingebracht werden müssen. Der Einbau einer konstruktiven Vertikalbewehrung als Anbauhilfe für die Fließsperre ist alternativ auch möglich und bevorzugt.

In einer weiteren bevorzugten Ausführungsform weist die Bewehrung eine obere Hauptbewehrung auf, und die Fließsperre erstreckt sich unterhalb der oberen Hauptbewehrung abwärts, vorzugsweise unmittelbar von der oberen Hauptbewehrung aus.

In einer weiteren bevorzugten Ausführungsform weist die Bewehrung eine untere Hauptbewehrung auf, und die Fließsperre erstreckt sich bis an die untere Hauptbewehrung heran erstreckt, vorzugsweise ohne an der unteren Hauptbewehrung befestigt zu werden, oder sich oberhalb der unteren Hauptbewehrung, wo die Fließsperre einen vorbestimmten Abstand zu der unteren Hauptbewehrung aufweist, vorzugsweise einen Abstand von 5 cm oder mehr, besonders bevorzugt 20 cm bis 40 cm.

Das Fundamentteil weist in einer bevorzugten Ausführungsform im Bereich der Neigung eine Außenwand mit einer Höhe auf, wobei die Höhe h der Außenwand gleich dem oder größer als der vorbestimmten Abstand I zu der unteren Hauptbewehrung ist.

In einer weiteren bevorzugten Ausführungsform ist die Fließsperre mit einer Vielzahl radialer, betondurchlässiger Ausnehmungen, etwa in Form von Löchern und/oder Spalten durchsetzt. Die Ausnehmungen dienen der besseren Anbindung der Fließsperre an den Beton. Sie verhindern das Bilden von vertikalen Fugen, die sonst entlang der Fließsperre beim Erstarren entstehen könnten.

In einer weiteren bevorzugten Ausführungsform ist die Fließsperre aus einem oder mehreren Gitter- oder Lochkörper ausgebildet, vorzugsweise aus Kunststoff oder Metallblech, weiter vorzugsweise aus Streckmetall, besonders bevorzugt aus Rippenstreckmetall.

In einer weiteren bevorzugten Ausführungsform ist der Ring ein erster Ring, und das Fundamentteil weist ferner einen oder mehrere weitere Ringe auf, wobei vorzugsweise einer, mehrerer oder sämtliche der weiteren Ringe gemäß dem zumindest einen Ring des Fundaments nach einer der vorstehend beschriebenen bevorzugten Ausführungsformen ausgebildet sind.

In einer weiteren bevorzugten Ausführungsform weist der Sockelbereich eine Sockel-Außenwand auf, und ein (innerer) Ring der Fließsperre ist in einem radialen Abstand von 0 cm bis 100 cm um die Sockel-Außenwand herum angeordnet. Alternativ oder zusätzlich umfasst die Fließsperre vorzugsweise drei oder mehr Ringe, die vorzugsweise mit gleichen Abständen zueinander oder mit radial nach außen größer werdenden Abständen zueinander angeordnet sind; und/oder
wobei ein innerer Ring eine Höhe in Richtung der Mittenachse in einem Bereich von 40 cm bis 80 cm aufweist, vorzugsweise 55 cm bis 65 cm, und die weiteren Ringe jeweils eine Höhe in Richtung der Mittenachse in einem Bereich von 15 bis 40 cm aufweisen, vorzugsweise 25 cm bis 35 cm; und/oder
wobei die Abstände der Ringe zueinander so gewählt sind, dass die Oberkante eines Rings jeweils auf der Höhe einer Unterkante eines radial innen benachbarten Rings angeordnet ist.

Die Erfindung wurde vorstehend in einem ersten Aspekt unter Bezugnahme auf ein Fundament beschrieben. In einem zweiten Aspekt betrifft die Erfindung ferner ein Verfahren zum Herstellen eines Fundaments einer Windenergieanlage, insbesondere eines Fundaments nach einer der vorstehend beschriebenen bevorzugten Ausführungsformen, mit einem Fundamentteil, welches eine Bewehrung aufweist, und eine oberseitige, nach außen hin abfallende Neigung aufweist.

Das Verfahren löst die eingangs bezeichnete Aufgabe, indem es die folgenden Schritte umfasst:
- Herstellen und/oder Bereitstellen einer Bewehrung an einem Errichtungsort für eine Windenergieanlage, wobei die Bewehrung, die vorzugsweise als Bewehrungskorb ausgebildet ist, eine Fließsperre aufweist,
- Herstellen und/oder Bereitstellen einer Schalung um die Bewehrung herum, und
- Betonieren des Fundamentteils mittels Einbringen von Beton in die Schalung, so dass die Bewehrung in dem Beton eingebettet wird, wobei die Fließsperre den Beton in seiner radialen Ausbreitung behindert.

Die Erfindung macht sich hinsichtlich des Verfahrens dieselben Vorteile und Erwägungen zunutze wie das Fundament gemäß dem ersten Aspekt. Bevorzugte Ausführungsformen des Fundaments sind zugleich bevorzugte Ausführungsformen des Verfahrens und umgekehrt, weswegen zur Vermeidung von Wiederholungen vorsorglich auf die obigen Ausführungen verwiesen wird.

Im erfindungsgemäßen Verfahren ist das Fundamentteil vorzugsweise nach einer der vorstehend beschriebenen bevorzugten Ausführungsformen des ersten Aspekts ausgebildet.

Der Beton wird im erfindungsgemäßen Verfahren vorzugsweise lagenweise gegossen, jeweils mit einer Höhe von 40 cm oder weniger, vorzugsweise jeweils mit einer Höhe von 30 cm oder weniger, besonders bevorzugt 25 cm oder weniger. Hierdurch wird jeweils eine gute Ausbreitung und Verdichtung des Betons und ein sukzessives Erstarren mit homogenem Gesamtgefüge des Fundamentteils erreicht.

In einer weiteren bevorzugten Ausführungsform weist der verwendete Beton im erfindungsgemäßen Verfahren die Ausbreitmaßklasse F3 bis F4, und/oder die Setzfließmaßklasse S3 bis S4 auf. Unter dem Ausbreitmaß und dem Setzfließmaß werden erfindungsgemäß die Konsistenzklassen gemäß DIN EN 206-1 verstanden. Hierdurch wird beim Betonieren trotz hohen Neigungen eine Reduzierung von Personal- und Geräteeinsatz erreicht.

In einem weiteren Aspekt betrifft die Erfindung ferner eine Windenergieanlage mit einem Turm, der an einem Fundament befestigt ist. Die Erfindung löst die ihr zugrundeliegende Aufgabe bezüglich dieser Windenergieanlage, indem das Fundament nach einer der vorstehend beschriebenen bevorzugten Ausführungsformen des ersten Aspekts ausgebildet ist.

Die Windenergieanlage macht sich diesbezüglich die gleichen Erwägungen zunutze wie das Fundament gemäß dem ersten Aspekt. Bevorzugte Ausführungsformen des Fundaments des ersten Aspekts sind zugleich bevorzugte Ausführungsformen der Windenergieanlage und umgekehrt, weswegen zur Vermeidung von Wiederholungen auf die obigen Ausführungen verwiesen wird.

In noch einem weiteren Aspekt betrifft die Erfindung die Verwendung zumindest eines Rings, der umlaufend in einer Bewehrung vorgesehen ist, zum Erzeugen eines Fundaments einer Windenergieanlage, insbesondere eines Fundaments nach einer der vorstehend beschriebenen bevorzugten Ausführungsformen des ersten Aspekts, und/oder in einem Verfahren nach einer der vorstehend beschriebenen bevorzugten Ausführungsformen des zweiten Aspekts, wobei das Fundament eine Fundamentplatte aufweist, die aus mittels der Bewehrung verstärktem Beton ausgebildet ist, und eine oberseitige, nach außen hin abfallende Neigung aufweist.

Die Verwendung löse die eingangs bezeichnete Aufgabe, indem der zumindest eine Ring in radialer Richtung eine Fließsperre für den Beton ausbildet.

Die Verwendung macht sich dieselben Vorteile und Erwägungen zunutze wie das Fundament und das Verfahren der vorstehend beschriebenen Aspekte. Die bevorzugten Ausführungsformen der ersten beiden Aspekte sind zugleich bevorzugte Ausführungsformen der Verwendung des dritten Aspekts und umgekehrt, weswegen insoweit zur Vermeidung von Wiederholungen auf die obigen Ausführungen verwiesen wird.

Die Erfindung wird nachfolgend unter Bezugnahme auf die beigefügten Figuren unter Bezugnahme auf ein bevorzugtes Ausführungsbeispiel näher beschrieben. Hierbei zeigen:
- Fig. 1: eine Windenergieanlage,
- Fig. 2: ein Fundament für die Windenergieanlage gemäß Fig. 1 in einer schematischen Querschnittsansicht,
- Fig. 3: eine Draufsicht auf das Fundamentteil gemäß Fig. 2,
- Fig. 4: eine Detailansicht, schematisch, im Querschnitt, des Fundaments gemäß den Figuren 2 und 3, und
- Fig. 5: einen schematischen Verfahrensablauf gemäß einem bevorzugten Ausführungsbeispiel.

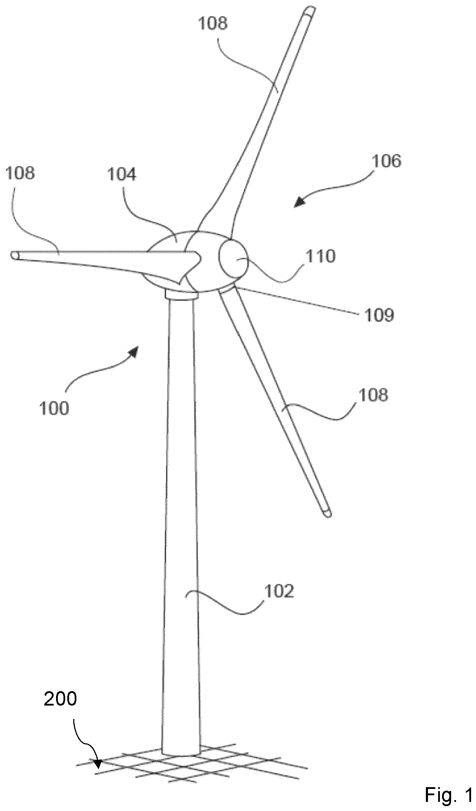

Fig. 1 zeigt eine schematische, dreidimensionale Ansicht einer Windenergieanlage 100. Die Windenergieanlage 100 weist einen Turm 102 und eine Gondel 104 auf dem Turm 102 auf. Der Turm 102 kann hierbei aus aneinander angeordneten Turmsegmenten bestehen. An der Gondel 104 ist ein aerodynamischer Rotor 106 mit drei Rotorblättern 108 angeordnet, sowie mit einem Spinner 110. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der Generator ist in der Gondel 104 angeordnet und erzeugt elektrische Energie.

Der Turm 102 ist mittels eines Fundaments im Erdreich 200 verankert, auf welches in den folgenden en 2 bis 4 näher eingegangen wird.

Das Fundament 1 weist ein Fundamentteil 3, im vorliegenden Beispiel exemplarisch eine Fundamentplatte auf, das im Bereich seiner Mittenachse L einen Sockelbereich 5 aufweist, an den sich radial außerhalb ein vorstehender Bereich 7 anschließt. Bei einer Fundamentplatte wird der vorstehende Bereich 7 als Spornbereich bezeichnet. Im vorstehenden Bereich 7 weist das Fundamentteil 3 eine oberseitige, nach außen hin abfallende Neigung α auf, die im bevorzugten Ausführungsbeispiel im Bereich von 12° oder mehr liegt. Bei einer Fundamentplatte wird diese Neigung auch als Spornneigung bezeichnet.

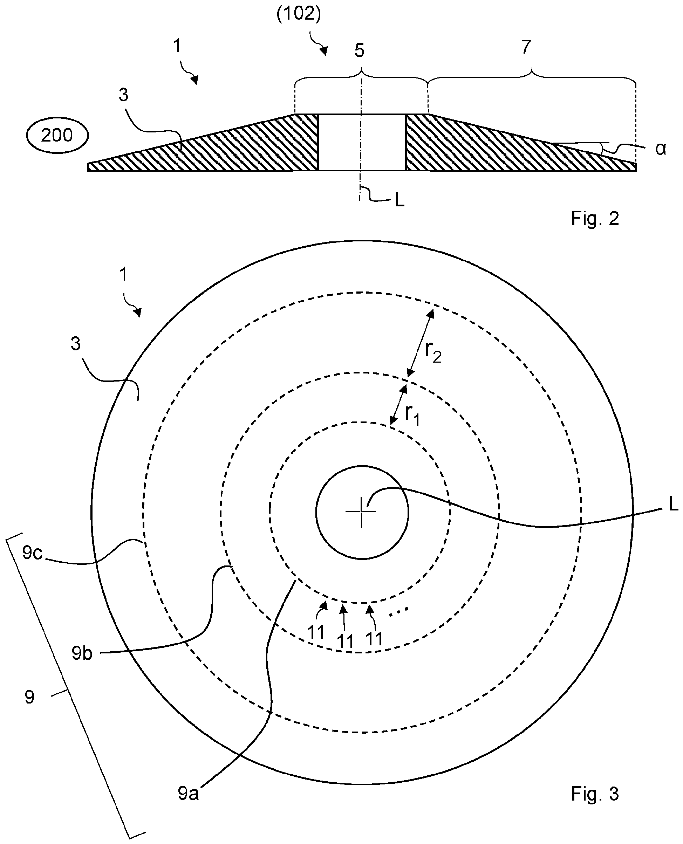

In Fig. 3, welche das Fundament 1 von oben zeigt, ist eine Fließsperre 9 eingezeichnet, die im vorliegenden Ausführungsbeispiel aus einer Anzahl von Ringen 9a, 9b, 9c besteht. Grundsätzlich ließe sich die Fließsperre 9 auch mit bereits einem Ring, beispielsweise Ring 9a, realisieren.

Einer, mehrere oder sämtliche der Ringe 9a, 9b, 9c sind mit einer Vielzahl von Durchgangsöffnungen 11 durchsetzt. Die Fließsperre 9 ist konzentrisch zur Mittenachse L angeordnet.

Bei der, hier gezeigten, Verwendung mehrerer Ringe 9a, 9b, 9c sind benachbarte Ringe 9a, 9b und 9b, 9c jeweils aufgrund ihrer unterschiedlichen Durchmesser in radialer Richtung voneinander beabstandet, wobei der radiale Abstand r₁, r₂ nach außen hin zwischen jeweils benachbarten Ringen 9a, 9b und 9b, 9c zunimmt.

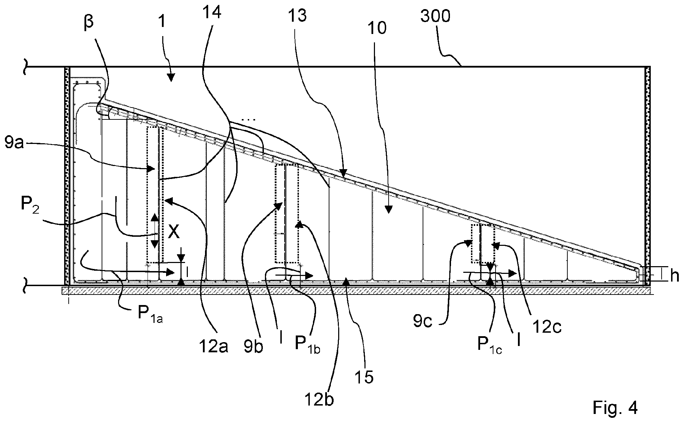

In Fig. 4 ist der Bereich 7 des Fundaments 1 näher gezeigt. Innerhalb einer Schalung 300 ist eine Bewehrung 10 des Fundaments 1 angeordnet, welche eine oberseitige Hauptbewehrung 13 und eine unterseitige Hauptbewehrung 15 aufweist. Zwischen der oberseitigen Hauptbewehrung 13 und der unterseitigen Hauptbewehrung 15 ist eine aus einer Vielzahl vertikaler Strukturelemente bestehende vertikale Schubbewehrung 14 ausgebildet.

In den Bereichen 12a, 12b, 12c ist an die vertikale Schubbewehrung 14 jeweils einer der Ringe 9a, 9b, 9c angebunden, vorzugsweise daran befestigt. Die Bewehrung 10 weist eine oberseitige Neigung β auf, deren Winkel zur Horizontalen vorzugsweise dem Winkel der Neigung α entspricht, im gezeigten Ausführungsbeispiel also beispielsweise 12° oder mehr beträgt.

Die Ringe 9a, 9b, 9c der Fließsperre 9 haben eine duale Funktion innerhalb der Bewehrung 10 des Fundaments 1. Zum anderen dienen sie dazu, beim Betonieren die Ausbreitung des Betons F in radialer Richtung zu verhindern, wie in Fig. 4 schematisch gezeigt ist.

Wird Beton, beispielsweise im inneren, in Fig. 4 linken, Bereich der Bewehrung 10 von oben in die Schalung 300 eingefüllt, kann der Beton entlang der Pfeile P₁ₐ, P_{1b}, P_{1c} im unteren Bereich der Bewehrung 10 an der unteren Hauptbewehrung 15 entlang über die ganze radiale Breite des Fundaments 1 fließen.

Da die Ringe 9a, 9b, 9c aber jeweils nicht ganz bis auf die untere Hauptbewehrung 15 durchgezogen sind, sondern zu der unteren Hauptbewehrung 15 einen Abstand I wahren, setzt die Fließsperrenfunktion der Ringe 9a, 9b, 9c erst ein, sobald eine Füllhöhe des Betons F innerhalb der Schalung 300 erreicht ist, die den Wert des Abstands I überschreitet. I liegt vorzugsweise in einem Bereich von 5 cm bis 45 cm, beispielsweise etwa in einem Bereich um 30 cm herum. Das Fundamentteil 3 weist an seinem äußeren Umfang eine Höhe h auf, die mindestens dem Abstand I entspricht.

In alternativen Ausführungsformen können die Ringe bis direkt über die Hauptbewehrung herunter reichen, wobei sie aber vorzugsweise mit der unteren Hauptbewehrung unverbunden bleiben.

Ist dieser Füllstand erreicht, kann der eingefüllte Beton F sich nicht mehr frei in radialer Richtung innerhalb der Schalung 300 ausbreiten, sondern wird, wie durch Pfeil P₂ gezeigt, in seiner radialen Ausbreitung zumindest eingeschränkt, wenn nicht daran gehindert. Die in den Ringen 9a, 9b, 9c vorgesehenen Ausnehmungen erschweren den Durchtritt des Betons soweit, dass die Erzeugung hoher Neigungen α von 12° oder mehr, insbesondere von 15° oder mehr, im Vergleich zum Stand der Technik deutlich erleichtert sind, selbst, wenn beim Betonieren ein vergleichsweise dünnflüssiger Beton, etwa mit einer Ausbreitmaßklasse F3 oder F4, und/oder einer Setzfließmaßklasse S3 oder S4 gemäß DIN EN 206-1 verwendet wird.

Die Verwendung des dünnflüssigeren Betons sorgt gleichzeitig für eine gute Anbindung auch der Fließsperre 9 innerhalb des Fundaments 1, und die Ausnehmungen 11 verbessern die Verankerung der Fließsperre im Beton im Vergleich zu geschlossenporigen Ringen ohne Ausnehmungen. Die Ausnehmungen 11 dienen zugleich potentiell als Entlüftungsöffnungen beim Verfüllen.

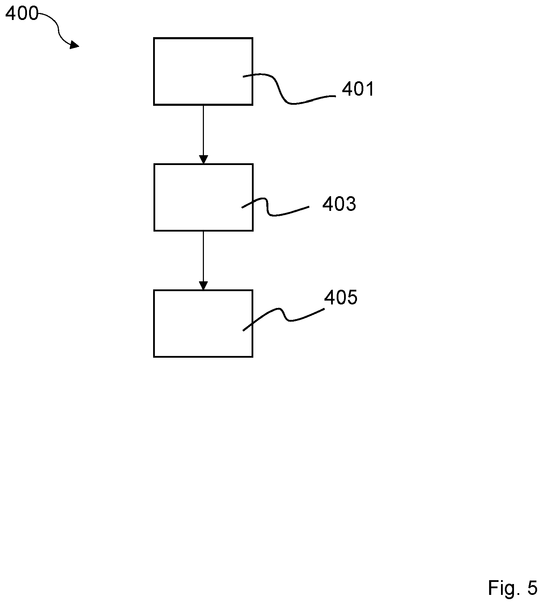

Die Herstellung des erfindungsgemäßen Fundaments vollzieht sich in einem bevorzugten Ausführungsbeispiel in dem folgenden Verfahren, welches in Fig. 5 exemplarisch dargestellt ist. In einem ersten Schritt 401 wird die Bewehrung 10 hergestellt und/oder bereitgestellt, und zwar an einem Errichtungsort für die Windenergieanlage 100, wobei die Bewehrung 10 vorzugsweise als Bewehrungskorb gemäß Fig. 4 ausgebildet ist. Die Bewehrung 10 weist erfindungsgemäß eine Fließsperre 9 auf.

In einem nächsten Schritt 403 wird eine Schalung 300 um die Bewehrung 10 herum bereitgestellt oder hergestellt. Die Reihenfolge der Schritte 401 und 403 kann auch umgekehrt werden.

Sobald Schalung und Bewehrung bereitgestellt wurden, erfolgt in einem nächsten Schritt 405 das Betonieren des Fundamentteils 3 mittels Einbringen von Beton F in die Schalung 300. Die Bewehrung 10 wird dabei zumindest teilweise, und vorzugsweise vollständig, in den Beton F eingeschlossen, wobei die Fließsperre 9 den Beton F in seiner radialen Ausbreitung behindert. Es kann zweckmäßig sein, den Vorgang des Betonierens radial innen im Sockelbereich des Fundaments 1 zu beginnen und dann nach außen hin zu arbeiten. Grundsätzlich ermöglichen die Fließsperren aber auch das Arbeiten in anderer Richtung.

So wird vorzugsweise im erfindungsgemäßen Verfahren das Fundament 1 nach einer der vorstehend beschriebenen bevorzugten Ausführungsformen ausgebildet.

Der Schritt des Betonierens erfolgt in einer bevorzugten Variante des Verfahrens in mehreren Etappen, wobei der Beton F jeweils abschnittsweise mit einer Höhe von 40 cm oder weniger betoniert wird, vorzugsweise jeweils mit einer Höhe von 30 cm oder weniger, besonders bevorzugt mit einer Höhe von 25 cm oder weniger pro Betoniergang.

Der verwendete Beton F weist vorzugsweise eine Ausbreitmaßklasse F3 oder F4, und/oder eine Setzfließmaßklasse S3 oder S4 auf, jeweils gemäß DIN EN 206-1.

Durch die vorstehend beschriebene Verwendung eines oder mehrerer Ringe 9a, 9b, 9c innerhalb der Bewehrung 10 zum Herstellen des Fundaments 1 der Windenergieanlage 100 bietet zusammenfassend also die signifikanten Vorteile einer zügigeren Herstellung, weil ein im Vergleich zum Stand der Technik deutlich dünnflüssigerer Beton verwendet werden kann, sodass höhere Neigungen mit vergleichsweise verringertem Aufwand bereitgestellt werden können.

### Bezugszeichenliste

- 1: Fundament
- 3: Fundamentteil, insb. Fundamentplatte
- 5: Sockelbereich
- 7: vorstehender Bereich, insb. Spornbereich
- 9: Fließsperre
- 9a, 9b, 9c: Ring
- 10: Bewehrung
- 11: Durchgangsöffnungen
- 12a, 12b, 12c: Bereich
- 13: Hauptbewehrung, oben
- 14: Schubbewehrung, vertikal
- 15: Hauptbewehrung, unten
- 100: Windenergieanlage
- 102: Turm
- 104: Gondel
- 106: Rotor
- 108: Rotorblättern
- 110: Spinner
- 200: Erdreich
- 300: Schalung
- 400: Verfahren
- 401: Verfahrensschritt
- 403: Verfahrensschritt
- 405: Verfahrensschritt
- L: Mittenachse
- F: Betone
- I: Abstand
- P₁ₐ, P_{1b}, P_{1c}: Pfeil
- P₂: Pfeil
- r₁, r₂: Radialer Abstand
- α: Neigung, vorstehender Bereich, insb. Spornbereich
- β: oberseitige Neigung, Bewehrung

## Patentansprüche

1. Fundament (1) einer Windenergieanlage (100), mit
einer Fundamentplatte (3), die aus mittels einer Bewehrung (10) verstärktem Beton (F) ausgebildet ist, und eine oberseitige, nach außen hin abfallende Neigung (α) aufweist,
**dadurch gekennzeichnet, dass** eine Fließsperre (9) innerhalb des Fundamentteils (3) angeordnet und dazu eingerichtet ist, ein Fließen des Betons (F) in radialer Richtung zu behindern.

2. Fundament (1) nach Anspruch 1,
wobei die Neigung (α) in einem Bereich von 12° oder mehr, weiter vorzugsweise in einem Bereich von 12° bis 45°, noch weiter bevorzugt in einem Bereich von 12° bis 18°, besonders bevorzugt in einem Bereich von 12° bis 16° liegt, und/oder
wobei die Bewehrung (10) eine oberseitige Neigung (β) aufweist, die im Wesentlichen gleich der Neigung (α) des Fundamentteils (3) ist.

3. Fundament (1) nach Anspruch 1 oder 2,
wobei die Fließsperre (9) zumindest einen Ring (9a,9b,9c) aufweist, welcher umlaufend innerhalb der Bewehrung (10) angeordnet ist.

4. Fundament (1) nach einem der vorstehenden Ansprüche,
wobei das Fundamentteil (3) eine Mittenachse (L) aufweist, und die Fließsperre (9) konzentrisch zu der Mittenachse (L) ausgerichtet ist.

5. Fundament (1) nach einem der vorstehenden Ansprüche,
wobei die Fließsperre (9) mit der Bewehrung (10) verbunden ist, wobei vorzugsweise die Bewehrung (10) eine vertikale Schubbewehrung (11) aufweist, und die Fließsperre (9) im Bereich der vertikalen Schubbewehrung (11) angeordnet ist.

6. Fundament (1) nach einem der vorstehenden Ansprüche,
wobei die Bewehrung (10) eine obere Hauptbewehrung (13) aufweist, und sich die Fließsperre (9) sich unterhalb der oberen Hauptbewehrung (13) abwärts erstreckt, vorzugsweise unmittelbar von der oberen Hauptbewehrung (13) aus.

7. Fundament (1) nach einem der vorstehenden Ansprüche,
wobei die Bewehrung (10) eine untere Hauptbewehrung (15) aufweist, und sich die Fließsperre (9) bis an die untere Hauptbewehrung heran erstreckt, ohne an der unteren Hauptbewehrung befestigt zu werden, oder sich oberhalb der unteren Hauptbewehrung (15) erstreckt, wobei die Fließsperre (9) einen vorbestimmten Abstand (I) zu der unteren Hauptbewehrung (15) aufweist, vorzugsweise einen Abstand von 5 cm oder mehr, besonders bevorzugt 20 cm bis 40 cm.

8. Fundament nach Anspruch 7,
wobei das Fundamentteil im Bereich der Neigung eine Außenwand mit einer Höhe (h) aufweist, wobei die Höhe (h) der Außenwand gleich dem oder größer als der vorbestimmten Abstand (l) zu der unteren Hauptbewehrung (15) ist.

9. Fundament (1) nach einem der vorstehenden Ansprüche,
wobei die Fließsperre (9) mit einer Vielzahl radialer, betondurchlässiger Ausnehmungen, etwa Löcher und/oder Spalte, durchsetzt ist.

10. Fundament (1) nach Anspruch 9,
wobei die Fließsperre (9) aus einem oder mehreren Gitter- oder Lochkörpern ausgebildet ist, vorzugsweise aus Kunststoff oder aus Metallblech, weiter vorzugsweise Streckmetall, besonders bevorzugt aus Rippenstreckmetall.

11. Fundament (1) nach einem der Ansprüche 3 bis 9,
wobei der Ring (9a,9b,9c) ein erster Ring (9a) ist, und das Fundamentteil (3) ferner einen oder mehrere weitere Ringe (9b,9c) aufweist, wobei vorzugsweise einer, mehrere oder sämtliche der weiteren Ringe (9b,9c) gemäß dem zumindest einen Ring (9a,9b,9c) des Fundaments (1) eines der vorstehenden Ansprüche ausgebildet sind.

12. Fundament (1) nach Anspruch 11,
wobei der Sockelbereich eine Sockel-Außenwand aufweist, und ein Ring (9a) der Fließsperre (9) in einem radialen Abstand von 0 cm bis 100 cm um die Sockel-Außenwand herum angeordnet ist; und/oder
wobei die Fließsperre drei oder mehr Ringe (9a, 9b, 9c) umfasst, die mit gleichen Abständen (r₁, r₂) zueinander oder mit radial nach außen größer werdenden Abständen (r₁, r₂) zueinander angeordnet sind; und/oder
wobei ein innerer Ring (9a) eine Höhe in Richtung der Mittenachse (L) in einem Bereich von 40 cm bis 80 cm aufweist, vorzugsweise 55 cm bis 65 cm, und die weiteren Ringe jeweils eine Höhe in Richtung der Mittenachse (L) in einem Bereich von 15 bis 40 cm aufweisen, vorzugsweise 25 bis 35 cm; und/oder
wobei die Abstände der Ringe zueinander so gewählt sind, dass die Oberkante eines Rings jeweils auf der Höhe einer Unterkante eines radial innen benachbarten Rings angeordnet ist.

13. Windenergieanlage (100), mit einem Turm (102), der an einem Fundament (1) befestigt ist,
**dadurch gekennzeichnet, dass** das Fundament nach einem der vorstehenden Ansprüche ausgebildet ist.

14. Verfahren (400) zum Herstellen eines Fundaments (1) einer Windenergieanlage (100), insbesondere eines Fundaments (1) nach einem der vorstehenden Ansprüche, mit einem Fundamentteil (3), welches eine Bewehrung (10) aufweist, und eine oberseitige, nach außen hin abfallende Neigung (α) aufweist,
umfassend die Schritte:
- (401) Herstellen und/oder Bereitstellen einer Bewehrung (10) an einem Errichtungsort für eine Windenergieanlage (100), wobei die Bewehrung (10), die vorzugsweise als Bewehrungskorb ausgebildet ist, eine Fließsperre (9) aufweist,
- (403) Herstellen und/oder Bereitstellen einer Schalung (300) um die Bewehrung (10) herum, und
- (405) Betonieren des Fundamentteils (3) mittels Einbringen von Beton (F) in die Schalung (300), so dass die Bewehrung (10) in dem Beton (F) eingebettet wird, wobei die Fließsperre (9) den Beton (F) in seiner radialen Ausbreitung behindert.

15. Verfahren nach Anspruch 14,
wobei der Beton (F) lagenweise, jeweils mit einer Höhe von 40 cm oder weniger betoniert wird, vorzugsweise jeweils mit einer Höhe von 30 cm oder weniger, weiter vorzugsweise 25 cm oder weniger.

16. Verfahren nach einem der Ansprüche 14 oder 15,
wobei der Beton (F) die Ausbreitmaßklasse F3 oder F4, und/oder die Setzfließmaßklasse S3 oder S4 aufweist.

17. Verwendung zumindest eines Rings, der umlaufend in einer Bewehrung (10) vorgesehen ist, zum Herstellen eines Fundaments einer Windenergieanlage (100), insbesondere nach einem der Ansprüche 1 bis 12 und/oder in einem Verfahren nach einem der Ansprüche 14 bis 16, wobei das Fundament (1) eine Fundamentplatte (3) aufweist, die aus mittels der Bewehrung (10) verstärktem Beton (F) ausgebildet ist, und eine oberseitige, nach außen hin abfallende Neigung (α) aufweist,
wobei der zumindest eine Ring in radialer Richtung eine Fließsperre (9) für den Beton (F) ausbildet.
